# FASCICULE DE BREVET EUROPEEN

(11) **EP 3 126 209 B1**
(45) Date de publication et mention de la délivrance du brevet: **02.05.2018**
(21) Numéro de dépôt: 15717041.6
(22) Date de dépôt: 27.03.2015
(51) Int. Cl.: B62D 25/08

(54) **STRUCTURE DE VEHICULE AUTOMOBILE RENFORCEE**
VERSTÄRKTE KRAFTFAHRZEUG STRUKTUR
REINFORCED VEHICLE STRUCTURE

(30) Priorité: 04.04.2014 FR 1453032
(43) Date de publication de la demande: 08.02.2017
(73) Titulaire: Renault S.A.S., 92100 Boulogne-Billancourt (FR)
(72) Inventeur: CAILLARD, Jerome, 91190 Gif Sur Yvette (FR); DELORD, Christian, 78000 Versailles (FR); HLUBINA, Thierry, 92370 Chaville (FR)
(86) Numéro de dépôt international: PCT/FR2015/050791
(87) Numéro de publication internationale: WO 2015/150669

(56) Documents cités:
- EP-A1- 1 840 004
- WO-A1-2011/113550
- DE-A1-102007 024 565
- DE-A1-102009 036 495
- DE-A1-102012 208 903
- FR-A1- 2 985 458
- JP-A- H11 180 343
- US-A- 3 188 132

## Description

La présente invention se rapporte à une structure de véhicule automobile comprenant un tablier et deux supports d'éléments de suspension en cloche reliés respectivement au tablier par des entretoises.

Usuellement, les structures de véhicule automobile comprennent un châssis et une carrosserie montée sur le châssis. Aussi, elles présentent, un compartiment avant destiné à recevoir le moteur lorsque celui-ci est à l'avant, et un habitacle séparé du compartiment avant par un tablier. Elles comprennent également deux supports d'éléments de suspension en cloche aménagés latéralement à l'intérieur du compartiment avant et près du tablier. Ces deux supports d'éléments de suspension en cloche sont adaptés à accueillir les éléments ressort et amortisseur de la suspension, laquelle est reliée aux arbres de roue. En particulier, la partie supérieure des supports forme coupelle, précisément pour recevoir les éléments ressort de la suspension en appui.

Le châssis comporte des longerons qui s'étendent longitudinalement sous le compartiment avant entre les supports d'éléments de suspension. Au surplus, les longerons sont mécaniquement reliés au support d'éléments de suspension. En outre, le tablier présente une traverse rigide et deux entretoises de retenue installées respectivement entre les deux supports d'éléments de suspension en cloche et la traverse. Ces entretoises de retenue sont destinées à retenir les supports au cours d'un choc frontal et éviter qu'ils ne fassent intrusion dans l'habitacle. On pourra se référer au document WO2011/113550, lequel décrit un tel agencement. Toutefois, il a été observé, que lors d'un choc frontal où les longerons sont entraînés longitudinalement vers l'arrière du véhicule, ils entraînaient conséquemment les supports d'éléments de suspension en cloche en rotation autour d'un axe vertical et en mouvement l'un vers l'autre tout en se rapprochant de l'habitacle. En effet, les longerons, au nombre de deux, sont comparativement rapprochés l'un de l'autre par rapport aux supports d'éléments de suspension en cloche écartés l'un de l'autre, et partant, lorsqu'ils se déforment, leur mouvement tend à induire des efforts qui viennent s'appliquer sur la face intérieure des supports d'éléments de suspension en cloche sensiblement tangentiellement. Dans certaines situations, un choc frontal provoque également le mouvement des supports d'éléments de suspension en cloche selon un axe vertical et en s'écartant du châssis. Le document DE102007024565A1 décrit une structure de véhicule automobile comprenant un compartiment avant présentant des parois latérales, et un habitacle séparé dudit compartiment avant par un tablier, ledit tablier présentant une traverse rigide, ladite structure comprenant deux supports d'éléments de suspension en cloche ménagés à l'intérieur dudit compartiment avant près dudit tablier, et respectivement adjacents auxdites parois latérales, lesdits supports d'éléments de suspension en cloche présentant chacun une face intérieure opposée à la paroi latérale, ladite structure comprenant en outre des entretoises s'étendant respectivement entre lesdits supports d'éléments de suspension en cloche et ladite traverse rigide, selon une direction sensiblement longitudinale. Lesdites entretoises sont respectivement ancrées dans les faces intérieures desdits deux supports d'éléments de suspension en cloche. Ces caractéristiques correspondent au préambule de la revendication 1 de la présente demande. Aussi, un problème qui se pose et que vise à résoudre la présente invention est de fournir une structure de véhicule automobile qui permette de mieux stabiliser les supports d'éléments de suspension en cloche par rapport à la carrosserie, lors d'un choc frontal. Dans ce but, la présente invention propose une structure de véhicule automobile comprenant un ancrage des entretoises dans les faces intérieures des supports de manière à pouvoir interdire la rotation des supports, provoquée par l'enfoncement des longerons, au cours d'un choc frontal. De la sorte, leur mouvement latéral est limité par rapport à la carrosserie durant le choc. Au surplus, et ainsi qu'on l'expliquera en détail dans la suite de la description, les entretoises permettent également de limiter leur mouvement vertical.

Aussi, lesdits supports d'éléments de suspension en cloche présentent respectivement une partie supérieure formant coupelle, et lesdites entretoises sont ancrées au niveau desdites coupelles. De la sorte, les entretoises viennent reprendre les efforts au niveau de la partie la plus rigide des supports d'éléments de suspension en cloche. Et au surplus, les coupelles reçoivent directement les éléments de suspension depuis l'intérieur des supports. Partant, une partie des efforts transmis par les éléments de suspension est reprise par les entretoises et partant, par la traverse du tablier.

De plus, lesdits supports d'éléments de suspension en cloche sont respectivement solidaires desdites parois latérales. Par conséquent, les supports d'éléments de suspension en cloche sont maintenus non seulement au niveau de leur face intérieure mais également au niveau de leur face opposée par les parois latérales du compartiment avant. Ce double maintien en position fixe par rapport à la carrosserie permet une meilleure tenue des supports d'éléments de suspension en cloche lors d'un choc frontal.

Selon l'invention, lesdites entretoises présentent chacune une bordure formée en jupe apte à venir s'appliquer sur lesdits supports d'éléments de suspension en cloche. Grâce à cette bordure formée en jupe, qui présente une coopération de forme avec les supports, on obtient une meilleure solidarisation de l'entretoise et des supports.

En outre, lesdites entretoises présentent chacune, de manière avantageuse, une bordure pliée s'étendant entre une extrémité libre et une extrémité de fixation opposée apte à être reliée à ladite traverse. Outre son rôle de fixation, la bordure pliée permet de rigidifier l'entretoise. De plus, lesdites entretoises présentent une portion centrale sensiblement triangulaire reliant ensemble lesdites bordure pliée et bordure formée en jupe. De la sorte, les deux bords opposés de l'entretoise, formés respectivement par la bordure pliée et la bordure formée en jupe, la rigidifie et permettent de limiter sa déformation lors d'un choc.

Préférentiellement, ladite bordure pliée de ladite entretoise présente une portion courbe située vers ladite extrémité libre, s'étendant sensiblement perpendiculairement à ladite bordure formée en jupe. De la sorte, on obtient une rigidification maximale de l'entretoise. Au surplus, ladite bordure pliée présente, vers ladite extrémité de fixation, une autre portion courbe s'étendant dans un plan sensiblement perpendiculaire à celui défini par ladite portion courbe située vers ladite extrémité libre.

Selon un mode de réalisation de l'invention particulièrement avantageux, ladite extrémité de fixation présente une languette percée, s'étendant sensiblement perpendiculairement à ladite portion courbe. La languette percée est alors reliée à plat à la traverse du tablier au moyen d'un organe vissé. Selon un autre mode de réalisation, la languette n'est pas percée, et elle est soudée à la traverse du tablier.

Par ailleurs, et selon une variante de réalisation particulièrement avantageuse, lesdites entretoises sont formées d'une seule pièce métallique emboutie. On obtient ainsi les entretoises à un coût avantageux. De plus, lesdites entretoises s'étendant respectivement entre lesdits deux supports d'éléments de suspension en cloche et ladite traverse sont images l'une de l'autre dans un miroir. De la sorte, les entretoises sont symétriques l'une de l'autre par rapport à un plan médian.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique partielle en perspective de trois quarts avant droit d'une structure de véhicule automobile conforme à l'invention ;
- la Figure 2 est une vue schématique de détail de la Figure 1 ;
- la Figure 3 est une vue schématique en coupe longitudinale des éléments illustrés sur la Figure 2 ;
- la Figure 4 est une vue schématique de dessus d'un élément illustré sur les Figures précédentes ; et,
- la Figure 5 est une vue schématique de côté selon la flèche V de l'élément illustré sur la Figure 4.

Dans le présent texte, les notions « avant » et « arrière » sont indiquées en référence à l'orientation classique avant-arrière du véhicule. La direction longitudinale correspond à l'orientation avant-arrière classique du véhicule. La direction transversale est perpendiculaire à cette orientation longitudinale. La direction verticale est perpendiculaire aux directions longitudinale et transversale.

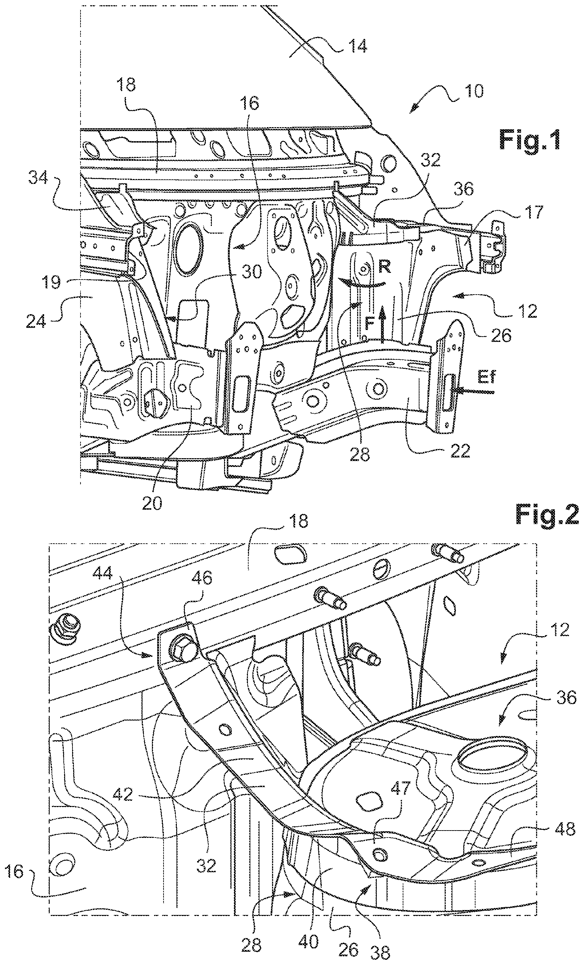

La Figure 1 illustre partiellement l'avant d'une structure de véhicule automobile 10 conforme à l'invention. La structure 10 comprend un compartiment avant 12 et un habitacle 14 séparés l'un de l'autre par un tablier 16. Le compartiment avant 12 présente deux parois latérales, une paroi latérale gauche 17 opposée à une paroi latérale droite 19. Le tablier 16 présente une traverse haute rigide 18 qui s'étend transversalement. La structure 10 présente deux longerons, un longeron droit 20 et un longeron gauche 22 qui s'étendent selon une direction longitudinale du véhicule sous le compartiment avant 12. En outre, de chaque côté des longerons 20, 22 s'étendent, en surplomb, des supports d'éléments de suspension en cloche, un support droit 24 et un support gauche 26. Le support gauche d'éléments de suspension en cloche 26 présente une face intérieure gauche 28 et une face extérieure opposée, masquée sur la Figure 1, et solidaire de la paroi latérale gauche 17. Les supports d'éléments de suspension en cloche 24, 26 sont symétriques l'un de l'autre par rapport à un plan longitudinal et vertical s'étendant entre les longerons 20, 22. Aussi, le support droit d'éléments de suspension en cloche 24 présente une face intérieure droite 30 qui s'étend en regard de la face intérieure gauche 28 du support gauche d'éléments de suspension en cloche 26. De plus, il présente une face extérieure opposée solidaire de la paroi latérale droite 19 du compartiment avant 12.

En outre, chacun des supports d'éléments de suspension en cloche 24, 26 est relié à la traverse haute rigide 18 au moyen d'une entretoise de retenue, une entretoise gauche 32 pour le support gauche 26 et une entretoise droite 34 pour le support droit 24.

L'agencement décrit ci-après pour l'entretoise gauche 32 s'applique par symétrie à l'agencement concernant l'entretoise droite 34 sans sortir du cadre de l'invention. On se référera à la Figure 2 montrant en détail l'entretoise gauche 32 installée entre la traverse haute rigide 18 du tablier 16 et le support gauche d'éléments de suspension en cloche 26. Ce dernier présente sa face intérieure gauche 28 et il présente en outre une partie supérieure 36 formant coupelle. Cette partie supérieure 36 formant coupelle est destinée à recevoir en appui, depuis l'intérieur du support d'éléments de suspension en cloche 26, précisément, des éléments de la suspension, et notamment des organes élastiques, ressort et amortisseur. Aussi, l'entretoise gauche 32 est ancrée dans la face intérieure gauche 28 du support 26 au niveau de la partie supérieure 36 formant coupelle.

La face intérieure gauche 28 présente au niveau de l'intersection avec la partie supérieure 36 formant coupelle, une bordure sensiblement cylindrique 38, tandis que l'entretoise 32 présente, elle, une bordure inférieure formée en jupe 40 qui vient par coopération de forme s'appliquer parfaitement contre une partie de la bordure sensiblement cylindrique 38. On note que la bordure en jupe 40 de l'entretoise 32 s'étend vers le bas. En outre, l'entretoise 32 présente une bordure pliée 42 présentant dans sa partie arrière une extrémité de fixation 44 munie d'une languette percée 46 et une extrémité libre opposée 48. La bordure pliée 42 est située dans une région supérieure de l'entretoise 32. On observera que la bordure pliée 42 présente une première portion courbe 47 qui vient s'étendre sensiblement perpendiculairement à la bordure formée en jupe 40 au niveau de la face intérieure gauche 28. La bordure pliée 42 présente une seconde portion courbe, qui s'étend entre la première portion courbe 47 et l'extrémité de fixation 44, et dont le plan moyen qu'elle définit est sensiblement perpendiculaire à celui qui est défini par la première portion courbe 47.

Ainsi qu'on l'expliquera ci-après, la languette percée 46 de l'extrémité de fixation 44 permet la fixation au moyen d'un organe vissé sur la traverse 18.La languette percée 46 est dirigée de façon sensiblement verticale et transversale. Elle est appliquée contre une face avant de la traverse haute rigide 18 du tablier 16. Selon un autre mode de réalisation, il est prévu de souder la languette non percée par cordons ou par points.

Quant à la bordure formée en jupe 40 elle est rendue solidaire du support gauche d'éléments de suspension en cloche 26, par exemple au moyen d'un cordon de soudure ou bien même, de points de soudure. Dans un autre mode de réalisation, non représenté, il est prévu de fixer la bordure formée en jupe 40 au moyen de vis ou bien de rivets.

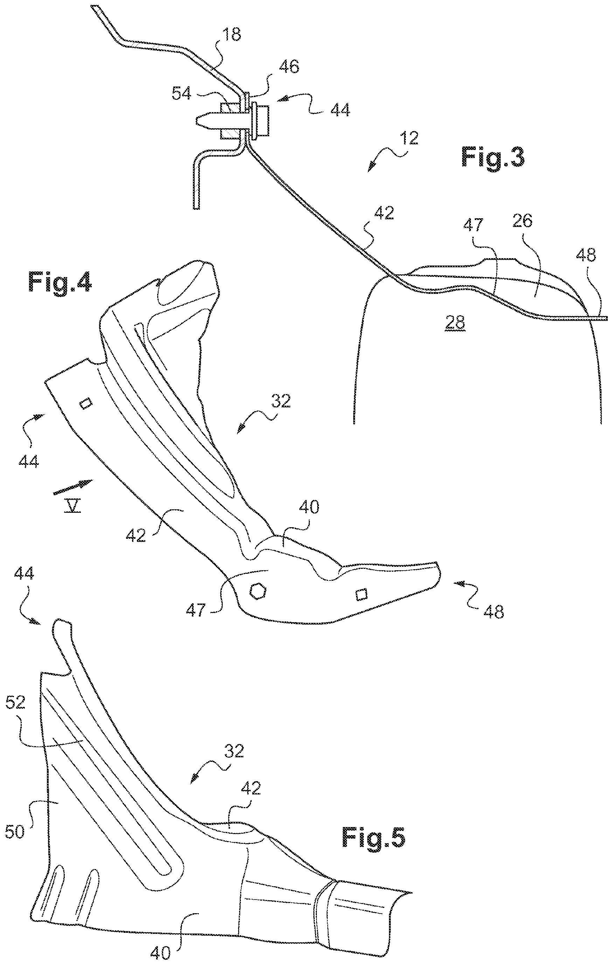

Les Figures 4 et 5 illustrent en détail l'entretoise gauche 32 selon deux angles de vue différents. La Figure 4 illustre en détail l'entretoise gauche 32 vue de dessus. On y retrouve la bordure pliée 42 qui s'étend en double courbure, entre son extrémité de fixation 44 et son extrémité libre 48, et la bordure formée en jupe 40 qui s'étend sensiblement perpendiculairement à la première portion courbe 47 de la bordure pliée 42.

L'entretoise gauche 32 est réalisée d'une seule pièce emboutie dans un matériau métallique, par exemple en acier.

Sur la Figure 5, l'entretoise gauche 32 est vue de côté et on y retrouve la bordure formée en jupe 40 et la bordure pliée 42. Les deux bordures 40, 42 sont alors reliés ensemble par une portion centrale sensiblement triangulaire 50 de manière à ne former qu'une seule pièce. La forme générale sensiblement triangulaire est visible principalement suivant une vue correspondant à la flèche V de la figure 5, c'est-à-dire à une vue transversale au véhicule. Autrement dit, la bordure pliée 42 est située le long d'un côté supérieur du triangle. La bordure en jupe 40 forme un côté inférieur du triangle ayant une forme courbe qui épouse la face intérieure 28 du support d'éléments de suspension. La bordure en jupe 40 est courbe dans un plan sensiblement horizontal pour épouser la forme convexe de cette face intérieure 28. Un troisième côté du triangle situé à l'arrière est appliqué contre le tablier 16. La bordure pliée 42 est dirigée vers le côté intérieur du compartiment moteur, suivant une direction transversale au véhicule. Cette bordure pliée se termine à l'arrière par l'extrémité de fixation 44 munie de la languette percée 46. En référence à la figure 4, le troisième côté du triangle situé à l'arrière de la portion centrale 50 présente une conformation dirigée vers le côté extérieur adjacent du véhicule, considéré suivant une direction transversale au véhicule, cette conformation venant en appui sur la cloison avant du tablier 16. Cette conformation est de ce fait dirigée à l'opposé de la bordure pliée 42 qui est dirigée vers le côté intérieur du véhicule, c'est à dire vers le compartiment moteur. Les efforts sont de ce fait répartis des deux côtés de la portion centrale, d'une part sur la traverse supérieure 18 de tablier, et d'autre part vers le tablier 16. On rappelle que le tablier est une cloison structurelle séparant le compartiment moteur et l'habitacle.

La portion centrale 50 sensiblement triangulaire présente une nervure principale 52 sensiblement parallèle à la bordure pliée 42 dans sa portion située vers l'extrémité de fixation 44. Une telle nervure principale 52 permet de rigidifier l'entretoise gauche 32. Par ailleurs, on observera que l'épaisseur de l'entretoise peut être adaptée en fonction de la résistance à la déformation que l'on souhaite. Ainsi, sans encombrement supplémentaire, il est aisé de moduler la résistance à la déformation de l'entretoise, et partant la résistance aux chocs.

On retrouve sur la Figure 3, vues en coupe, et partiellement, l'extrémité de fixation 44 de la bordure pliée 42 et la languette 46 appliquée à plat contre le bord de la traverse 18 pour y être fixée au moyen d'un organe vissé 54. La traverse haute rigide 18 présente un profil droit en U dont la feuillure s'étend dans un sens opposé au compartiment avant 12, de manière à accroître la rigidité en cas de choc. On retrouve également l'extrémité libre opposée 48 de la bordure pliée 42 et la portion courbe 47 qui vient entourer partiellement le support gauche d'éléments de suspension en cloche 26, sur sa face intérieure gauche 28.

On a décrit en détail, ci-dessus, l'entretoise gauche 32 et sa coopération avec le support gauche d'éléments de suspension en cloche 26 et la traverse 18. L'agencement de l'entretoise droite 34 en coopération avec le support droit d'éléments de suspension en cloche 24 et la traverse 18 est symétrique par rapport au plan longitudinal et vertical s'étendant entre les longerons 20, 22 représentés sur la Figure 1.

On se reportera de nouveau sur la Figure 1 de manière à montrer l'avantage de la mise en place des entretoises 32, 34.

Ainsi, lorsque survient un choc frontal, un effort Ef vient s'exercer longitudinalement sur les longerons 20, 22. On décrira les impacts d'un tel effort sur la partie gauche de la structure 10, pour la clarté de l'explication. Toutefois, les impacts sont identiques sur la partie droite. Ainsi, cet effort peut avoir deux impacts. En effet, le longeron 22 est solidaire du support gauche d'éléments de suspension en cloche 26, et plus précisément de sa face intérieure gauche 28. Le support gauche d'éléments de suspension en cloche 26 est lui, solidaire de la paroi latérale gauche 17 du compartiment avant 12, par sa face extérieure opposée à la face intérieure 28. Par conséquent, l'effort Ef qui s'exerce longitudinalement sur le longeron gauche 22 va tendre à exercer un couple de rotation R autour d'un axe vertical sur le support gauche d'éléments de suspension en cloche 26. Or, grâce à l'entretoise gauche 32, fixée sur la traverse haute rigide 18 et ancrée précisément sur la face intérieure gauche 28 au niveau de la partie supérieure 36 formant coupelle, et opposée à la face extérieure, la rotation du support gauche d'éléments de suspension en cloche 26 est précisément empêchée. Partant, son intrusion dans l'habitacle est également empêchée et la compression du longeron est stabilisée dans son axe longitudinal.

En outre, l'effort Ef qui s'exerce longitudinalement sur le longeron gauche 22 peut également avoir pour effet d'entraîner en translation F le support gauche d'éléments de suspension en cloche 26 selon un axe vertical. Or, toujours grâce à l'entretoise gauche 32, solidaire de la traverse 18, les efforts de translation sont repris précisément par la traverse 18.

De plus, grâce aux entretoises 32, 34, on génère de meilleurs « isoraideurs » dynamiques en acoustique, de meilleures raideurs statiques, ainsi qu'une meilleure tenue en endurance sous les sollicitations ressort plus amortisseur.

Par ailleurs, l'encombrement spatial des entretoises 32, 34 est modeste, et de la sorte, il est plus aisé de procéder aux travaux d'étanchéité et notamment de mise en oeuvre de mastic ou de préservation des surfaces contre la corrosion. De plus, la partie supérieure 36 formant coupelle est laissée libre, ce qui permet de la nervurer. Partant, on obtient une tenue à l'endurance équivalente à celle d'une partie supérieure non nervurée et plus épaisse. On obtient par là même un gain de masse appréciable.

## Revendications

1. Structure de véhicule automobile (10) comprenant un compartiment avant (12) présentant des parois latérales (17, 19), et un habitacle (14) séparé dudit compartiment avant par un tablier (16), ledit tablier (16) présentant une traverse rigide (18), ladite structure (10) comprenant deux supports d'éléments de suspension en cloche (24, 26) gauche et droit ménagés à l'intérieur dudit compartiment avant (12) près dudit tablier (16), et respectivement adjacents auxdites parois latérales (17, 19), chaque support d'éléments de suspension en cloche (24, 26) présentant chacun une face intérieure (28, 30) opposée à la paroi latérale (19, 17), ladite structure (10) comprenant en outre des entretoises (32, 34) gauche et droite s'étendant respectivement entre chaque support d'éléments de suspension en cloche (26, 24) gauche et droit et ladite traverse rigide (18), selon une direction sensiblement longitudinale,
**caractérisée en ce que** lesdites entretoises (32, 34) sont respectivement ancrées dans les faces intérieures (28, 30) desdits deux supports d'éléments de suspension en cloche (26, 24),
et **en ce que** lesdites entretoises (32, 34) présentent chacune une bordure formée en jupe (40) apte à venir s'appliquer sur lesdits supports d'éléments de suspension en cloche (26), et une bordure pliée (42) s'étendant entre une extrémité libre (48) et une extrémité de fixation (44) opposée apte à être reliée à ladite traverse (18), lesdites entretoises (32, 34) présentant une portion centrale (50) reliant ensemble lesdites bordure pliée (42) et bordure formée en jupe (40).

2. Structure de véhicule automobile selon la revendication 1, **caractérisée en ce que** lesdits supports d'éléments de suspension en cloche (26) présentent respectivement une partie supérieure (36) formant coupelle, et **en ce que** lesdites entretoises (32) sont ancrées au niveau desdites parties supérieures (36) formant coupelle.

3. Structure de véhicule automobile selon la revendication 1 ou 2, **caractérisée en ce que** lesdits supports d'éléments de suspension en cloche (26, 24) sont respectivement solidaires desdites parois latérales (17, 19).

4. Structure de véhicule automobile selon l'une quelconque des revendications précédentes, **caractérisée en ce que** la portion centrale (50) desdites entretoises a une forme générale sensiblement triangulaire.

5. Structure de véhicule automobile selon la revendication 4, **caractérisée en ce que** ladite bordure pliée (42) de ladite entretoise (32, 34) présente une portion courbe (47) située vers ladite extrémité libre (48), s'étendant sensiblement perpendiculairement à ladite bordure formée en jupe (40).

6. Structure de véhicule automobile selon la revendication 5, **caractérisée en ce que** ladite extrémité de fixation (44) présente une languette percée (46), s'étendant sensiblement perpendiculairement à ladite portion courbe (47).

7. Structure de véhicule automobile selon l'une quelconque des revendications précédentes, **caractérisée en ce que** lesdites entretoises (32, 34) sont formées d'une seule pièce métallique emboutie.

8. Structure de véhicule automobile selon l'une quelconque des revendications précédentes, **caractérisée en ce que** lesdites entretoises (32, 34), s'étendant respectivement entre lesdits deux supports d'éléments de suspension en cloche (26, 24) et ladite traverse (18), sont images l'une de l'autre dans un miroir.

## Patentansprüche

1. Kraftfahrzeugstruktur (10), die einen Seitenwände (17, 19) aufweisenden vorderen Raum (12) und einen vom vorderen Raum durch eine Schutzwand (16) getrennten Fahrzeuginnenraum (14) enthält, wobei die Schutzwand (16) einen steifen Querträger (18) aufweist, wobei die Struktur (10) zwei linke und rechte glockenförmige Aufhängungselementträger (24, 26) enthält, die im Inneren des vorderen Raums (12) nahe der Schutzwand (16) und je den Seitenwänden (17, 19) benachbart angeordnet sind, wobei jeder glockenförmige Aufhängungselementträger (24, 26) je eine Innenseite (28, 30) entgegengesetzt zur Seitenwand (19, 17) aufweist, wobei die Struktur (10) außerdem linke und rechte Abstandshalter (32, 34) enthält, die sich je zwischen jedem linken und rechten glockenförmiger Aufhängungselementträger (26, 24) und dem steifen Querträger (18) im Wesentlichen in Längsrichtung erstrecken,
**dadurch gekennzeichnet, dass** die Abstandshalter (32, 34) je in den Innenseiten (28, 30) der zwei glockenförmigen Aufhängelementträger (26, 24) verankert sind,
und dass die Abstandshalter (32, 34) je eine schürzenförmige Randleiste (40), die sich auf die glockenförmigen Aufhängungselementträger (26) auflegen kann, und eine umgebogene Randleiste (42) aufweisen, die sich zwischen einem freien Ende (48) und einem gegenüberliegenden Befestigungsende (44) erstreckt, das mit dem Querträger (18) verbunden werden kann, wobei die Abstandshalter (32, 34) einen zentralen Abschnitt (50) aufweisen, der die umgebogene Randleiste (42) und die schürzenförmige Randleiste (40) miteinander verbindet.

2. Kraftfahrzeugstruktur nach Anspruch 1, **dadurch gekennzeichnet, dass** die glockenförmigen Aufhängungselementträger (26) je einen oberen Teil (36) aufweisen, der eine Schale bildet, und dass die Abstandshalter (32) im Bereich der eine Schale bildenden oberen Teile (36) verankert sind.

3. Kraftfahrzeugstruktur nach Anspruch 1 oder 2, **dadurch gekennzeichnet, dass** die glockenförmigen Aufhängelementträger (26, 24) je mit den Seitenwänden (17, 19) fest verbunden sind.

4. Kraftfahrzeugstruktur nach einem der vorhergehenden Ansprüche, **dadurch gekennzeichnet, dass** der zentrale Abschnitt (50) der Abstandshalter eine allgemein dreieckige Form hat.

5. Kraftfahrzeugstruktur nach Anspruch 4, **dadurch gekennzeichnet, dass** die umgebogene Randleiste (42) des Abstandshalters (32, 34) einen sich zum freien Ende (48) hin befindlichen gekrümmten Abschnitt (47) aufweist, der sich im Wesentlichen lotrecht zur schürzenförmigen Randleiste (40) erstreckt.

6. Kraftfahrzeugstruktur nach Anspruch 5, **dadurch gekennzeichnet, dass** das Befestigungsende (44) eine durchbohrte Zunge (46) aufweist, die sich im Wesentlichen lotrecht zum gekrümmten Abschnitt (47) erstreckt.

7. Kraftfahrzeugstruktur nach einem der vorhergehenden Ansprüche, **dadurch gekennzeichnet, dass** die Abstandshalter (32, 34) aus einem einzigen tiefgezogenen metallischen Bauteil gebildet werden.

8. Kraftfahrzeugstruktur nach einem der vorhergehenden Ansprüche, **dadurch gekennzeichnet, dass** die Abstandshalter (32, 34), die sich je zwischen den zwei glockenförmigen Aufhängungselementträgern (26, 24) und dem Querträger (18) erstrecken, Spiegelbilder voneinander sind.

## Claims

1. Motor vehicle structure (10) comprising a front compartment (12) having side walls (17, 19), and a passenger compartment (14) that is separated from said front compartment by a bulkhead (16), said bulkhead (16) having a rigid cross member (18), said structure (10) comprising two left and right bell-shaped suspension element supports (24, 26) arranged inside said front compartment (12) close to said bulkhead (16), and that are respectively adjacent to said side walls (17, 19), each bell-shaped suspension element support (24, 26) having an internal face (28, 30) opposite the side wall (17, 19), said structure (10) also comprising left and right spacers (32, 34) that extend respectively between said left and right bell-shaped suspension element supports (26, 24) and said rigid cross member (18), in a substantially longitudinal direction,
**characterized in that** said spacers (32, 34) are respectively anchored to the internal faces (28, 30) of said two bell-shaped suspension element supports (26, 24),
and **in that** said spacers (32, 34) each have a skirt-shaped edge (40) that can be applied to said bell-shaped suspension element supports (26), and a folded edge (42) extending between a free end (48) and an opposing attachment end (44) that is designed to be joined to said cross member (18), said spacers (32, 34) having a central portion (50) joining said folded edge (42) and said skirt-shaped edge (40) together.

2. Motor vehicle structure according to Claim 1, **characterized in that** said bell-shaped suspension element supports (26) have respectively an upper portion (36) forming a cover, and **in that** said spacers (32) are anchored near to said upper portions (36) forming a cover.

3. Motor vehicle structure according to Claim 1 or 2, **characterized in that** said bell-shaped suspension element supports (26, 24) are rigidly connected to said side walls (17, 19) respectively.

4. Motor vehicle structure according to any one of the preceding claims, **characterized in that** the overall shape of the central portion (50) of said spacers is substantially triangular.

5. Motor vehicle structure according to Claim 4, **characterized in that** said folded edge (42) of said spacer (32, 34) has a curved portion (47) that is located towards said free end (48) and that extends substantially perpendicular to said skirt-shaped edge (40).

6. Motor vehicle structure according to Claim 5, **characterized in that** said attachment end (44) has a perforated tab (46) extending substantially perpendicular to said curved portion (47).

7. Motor vehicle structure according to any one of the preceding claims, **characterized in that** said spacers (32, 34) are formed from a single piece of pressed metal.

8. Motor vehicle structure according to any one of the preceding claims, **characterized in that** said spacers (32, 34) extending respectively between said two bell-shaped suspension element supports (26, 24) and said cross member (18) are mirror images of one another.
